# EUROPÄISCHE PATENTSCHRIFT

(11) **EP 1 274 925 B1**
(45) Veröffentlichungstag und Bekanntmachung des Hinweises auf die Patenterteilung: **10.05.2006**
(21) Anmeldenummer: 01943236.8
(22) Anmeldetag: 10.04.2001
(51) Int. Cl.: F01N 3/28, F01N 3/26

(54) **VERFAHREN UND VORRICHTUNG ZUR HERSTELLUNG EINES KATALYSATORS MIT EINEM NICHT-KREISFÖRMIGEN MONOLITHEN**
METHOD AND DEVICE FOR PRODUCING A CATALYST WITH A NON-CIRCULAR MONOLITH
PROCEDE ET DISPOSITIF POUR PRODUIRE UN CATALYSEUR COMPORTANT UN MONOLITHE NON CIRCULAIRE

(30) Priorität: 15.04.2000 DE 10018804
(43) Veröffentlichungstag der Anmeldung: 15.01.2003
(73) Patentinhaber: Volkswagen Aktiengesellschaft, 38436 Wolfsburg (DE)
(72) Erfinder: BEHNER, Attila, 34270 Schauenburg (DE); EMDE, Fred, 34134 Kassel (DE); NEURATH, Frank, 34305 Niederstein (DE); REINTANZ, Rudi, 34302 Guxhagen (DE); BROGER, Horst, 34466 Wolfhagen (DE)
(74) Vertreter: Pohlmann, Bernd Michael
(86) Internationale Anmeldenummer: PCT/EP2001/004063
(87) Internationale Veröffentlichungsnummer: WO 2001/079667

(56) Entgegenhaltungen:
- EP-A- 0 665 365
- DE-A- 4 316 870
- US-A- 4 282 186
- US-A- 4 322 388
- US-A- 5 180 408
- US-A- 5 273 724
- US-A- 5 482 681
- PATENT ABSTRACTS OF JAPAN vol. 007, no. 112 (M-215), 17. Mai 1983 (1983-05-17) & JP 58 032917 A (TOYOTA JIDOSHA KOGYO KK), 26. Februar 1983 (1983-02-26)

## Beschreibung

Die Erfindung bezieht sich auf ein Verfahren und eine Vorrichtung zur Herstellung eines Katalysators mit einem nicht-kreisförmigen Monolithen.

Abgaskatalysatoren für Kraftfahrzeuge bestehen aus einem zentralen, stabförmigen, keramischen Wabenkörper, Monolith genannt, der in Längsrichtung von vielen feinen Kanälen durchzogen ist. Der Monolith wird unter Zwischenlage einer sogenannten Blährnatte aus mineralischem Faserstoff von einem Mantelblech, insbesondere aus Edelstahl, umgeben. Das Mantelblech muß über seinem gesamten Umfang sehr eng sitzen, damit insbesondere während des Betriebs des Kraftfahrzeugs das stoßempfindliche Material des Monolithen nicht beschädigt wird, keine lästigen Klappergeräusche auftreten und die Abdichtung zwischen dem Monolithen und dem Mantelblech sichergestellt ist. Hierbei ist auch zu berücksichtigen, daß das Mantelblech im Ruhezustand kalt, im Betriebszustand hingegen sehr heiß ist. Infolgedessen unterliegt das Mantelblech einer gewissen Ausdehnung bzw. Schrumpfung im Umfangsbereich.

Derartige Katalysatoren wurden, offenbar aus Kostengründen, bisher nur mit kreisrunden Querschnitten hergestellt: Ist es doch allgemein bekannt, daß kreisrunde Querschnitte grundsätzlich am einfachsten abzudichten sind. Verschärfte gesetzliche Vorschriften und die Forderung nach besserer Bauraumausnutzung im Kraftfahrzeug lassen es jedoch heute wünschenswert erschienen, auch nicht-kreisförmige Katalysatoren herzustellen. Aber auch bei einer solchen Form muß das Mantelblech so eng den Monolithen umspannen, daß die Blähmatte für einen ausreichend festen, dichten Sitz und gleichzeitig für eine gewisse Dämpfung sorgen kann.

Aus dem Dokument US 4,322,388 ist bereits ein Verfahren zur Herstellung eines Katalysators mit einem nicht-kreisförmigen Monolithen, der unter Zwischenschluss einer Blähmatte von einem Mantelblech eng umschlossen wird, wobei das Mantelblech aus zwei Teilmantelblechen besteht. Dabei erfolgt ein Zusammendrücken der Teilmantelbleche so, dass eine Verschiebung der Überlappungsbereiche der Mantelbleche in Längsrichtung der Überlappung erfolgt. Ferner ist aus dem Dokument EP 0 665 365 A2 ein Abgasbehandlungskörper mit einer ovalen Konfiguration bekannt, der mit Formwerkzeugteilen in eine endgültige Ummantelungsform gebracht wird.

Der Erfindung liegt die Aufgabe zugrunde, ein Verfahren aufzuzeigen, bei dem die genannten technischen Anforderungen auch bei einem Katalysator erfüllt werden, der im

Querschnitt von der Kreisform abweicht. Des weiteren soll eine Vorrichtung zur Durchführung dieses Verfahrens vorgeschlagen werden.

Die Erfindung löst diese Aufgabe bei einem gattungsgemäßen Katalysator dadurch, daß das Mantelblech aus zwei Teilmantelblechen besteht, daß die beiden Teilmantelbleche so in ihre bestimmungsgemäße Endlage gebogen werden, daß sie sich mit zumindest im wesentlichen in Längsrichtung des Monolithen verlaufenden Randbereichen überlappen oder mindestens berühren und daß die Randbereiche miteinander unlösbar verbunden werden.

Die Erfindung ermöglicht die Ausbildung des Katalysators mit von der idealen Kreisform erheblich abweichendem Querschnitt: Besonders geeignet sind ovale, elliptische oder ähnliche Formen. Die Teilmantelbleche lassen sich sehr wirtschaftlich aus Platinen herstellen. Wird eine Überlappung der zu verbindenden Randbereiche vorgesehen, lassen sich auch größere Maßtoleranzen des Monolithen oder der Bleche ohne jeglichen zusätzlichen Aufwand im Überlappungsbereich ausgleichen. Die Teilmantelbleche können dann im Überlappungsbereich z.B. unter Schutzgas verschweißt werden. Liegen die Teilmantelbleche hingegen maßgenau Stoß an Stoß, kann zur Herstellung der Verbindung zusätzliches Schweißmaterial auf die Stoßstelle aufgebracht werden.

In der Regel werden die Teilmantelbleche mindestens nahezu in ihre Endform vorgeformt, bevor ihre Randbereiche in ihre Verbindungslage gebracht und miteinander verbunden, insbesondere verschweißt, werden. Soll ein ovaler, elliptischer oder ähnlicher Querschnitt hergestellt werden, so werden die Teilmantelbleche mindestens in etwa in U-Form vorgebogen sein.

Um eine möglichst enge Ausgestaltung an einem Überlappungsbereich sicherzustellen, also möglichst wenig Luft einzuschließen, wird mindestens ein Randbereich eines Teilmantelbleches zum anschließenden, übrigen Bereich des Teilmantelbleches nach außen versetzt, also gekröpft, ausgebildet. Bei einer symmetrischen Ausbildung des Querschnitts können die Teilmantelbleche folglich in wirtschaftlicher Weise identisch ausgebildet werden.

Eine Vorrichtung zur Durchführung des erfindungsgemäßen Verfahrens sieht vor, daß eine Spann- und/oder Formvorrichtung mindestens den mittleren Stegabschnitt und eventuell die unmittelbar sich daran anschließenden Abschnitte beider Teilmantelbleche aufnimmt und die freien Schenkel der Teilmantelbleche so übereinander oder mindestens aneinander schiebt, daß die Randbereiche unlösbar, z.B. mittels Schweißen mit oder ohne Zusatzmaterial, miteinander verbunden werden können.

Eine solche Vorrichtung kann einen selbsthemmenden Antrieb, wie z.B. ein Exzenter- oder Schneckengetriebe, aufweisen.

Die Spann- und/oder Formvorrichtung kann ergänzt werden durch eine Druckvorrichtung, die mit Druckstücken außen auf die freien Schenkel und/oder die Randbereiche beider Teilmantelbleche drückt. Um den Zugang für eine Schweißvorrichtung zu sichern, lassen die Druckstücke die zu verbindenden Randbereiche mindestens im Schweißbereich frei.

Die Druckvorrichtung kann an sich beliebig ausgestaltet und betätigt sein. Insbesondere können die Druckstücke mechanisch über Spannschrauben oder Exzenter eingestellt sein. Dann führt die Verwendung von Vorrichtungen mit Drehmomentmessung, wie z.B. Drehmomentschlüsseln, zu genau reproduzierbaren Ergebnissen bei der Aufbringung der Druckkräfte.

Die Druckvorrichtung kann aus einem zweiarmigen Hebel bestehen, der mit einem Arm die Druckkraft auf die Teilmantelbleche aufbringt, indem der andere Arm mit Bezug auf den Drehpunkt des Hebels verschwenkbar ist.

Insbesondere bei einem zumindest annähernd ovalem Querschnitt ist es vorteilhaft, zwei oder auch vier zweiarmige Hebel so miteinander zu kombinieren, daß mindestens zwei Arme über eine gemeinsame Verstell- und/oder Betätigungsvorrichtung klauenartig bewegbar sind. Die Hebel können, wie schon genannt, mechanisch, aber auch über eine Kolben-Zylindereinheit pneumatisch oder hydraulisch einstellbar und betätigbar sein.

Die erfindungsgemäße Vorrichtung stellt definierte Haltekräfte des Monolithen zum Mantelblech bei den verschiedensten Querschnitten sicher und erlaubt somit eine prozeßsichere Fertigung des Katalysators mit von der Kreisform auch erheblich abweichendem Querschnitt.

In der Zeichnung wird die Erfindung anhand eines Ausführungsbeispiels erläutert. Hierzu wird das Verfahren mit Hilfe der zugehörigen Vorrichtung schematisch dargestellt und näher beschrieben.
Figur 1 zeigt die Draufsicht auf einen vormontierten, im Querschnitt etwa ovalen Katalysator mit zwei vorgeformten, aber noch ungespannten Mantelblechen.
Figur 2 zeigt die Draufsicht nach Figur 1, aber mit gespannten und zur Verschweißung bereiten Mantelblechen.
Figur 3 zeigt die Draufsicht auf eine kombinierte Spann-, Druck- und Schweißvorrichtung, in der die Mantelbleche zur Verschweißung bereit eingespannt sind.

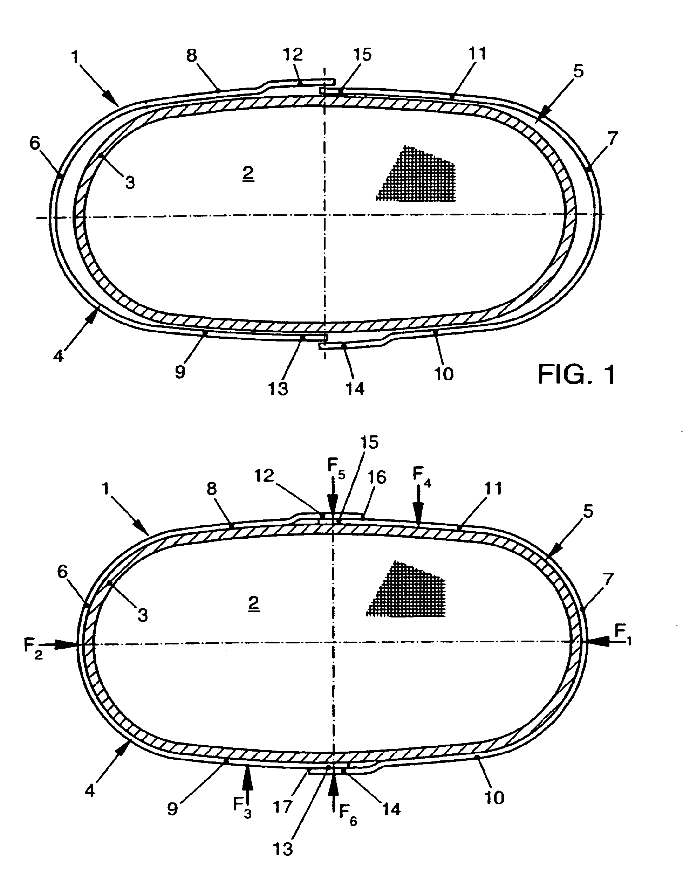

Der Katalysator 1 besteht in Figur 1 zunächst aus dem zentralen, stabförmigen keramischen Wabenkörper, der Monolith 2 genannt wird. Der Monolith 2 ist von einer sogenannten Blähmatte 3 aus mineralischem Faserstoff und zwei Teilmantelblechen 4 und 5 locker umgeben. Die Teilmantelbleche 4 und 5 sind identisch ausgebildet. Sie bestehen aus einem Chrom-Nickel-Stahl, sind aus Coilmaterial zu Platinen geschnitten und in U-Form vorgeformt. Sie weisen damit in etwa oder nahezu ihre endgültige Form auf.

Die Teilmantelbleche 4 und 5 umfassen einen mittleren Stegabschnitt 6 und 7 und sich daran anschließende Schenkel 8 bis 11. An den Längsseiten, also in Längsrichtung des Monolithen 2, weisen die Teilmantelbleche 4 und 5 an den Schenkeln 8 bis 11 Randbereiche 12 bis 15 auf, die sich schon etwas überlappen und zur Verbindung miteinander bestimmt sind. Die außen liegenden Randbereiche 12 und 14 sind von den übrigen Schenkeln 8 und 10 jedes Teilmantelbleches 4 und 5 nach außen versetzt, nach Art einer Verkröpfung, ausgebildet, so daß die Randbereiche 12 und 14 etwa parallel zu den darunterliegenden Randbereichen 15 und 13 liegen.

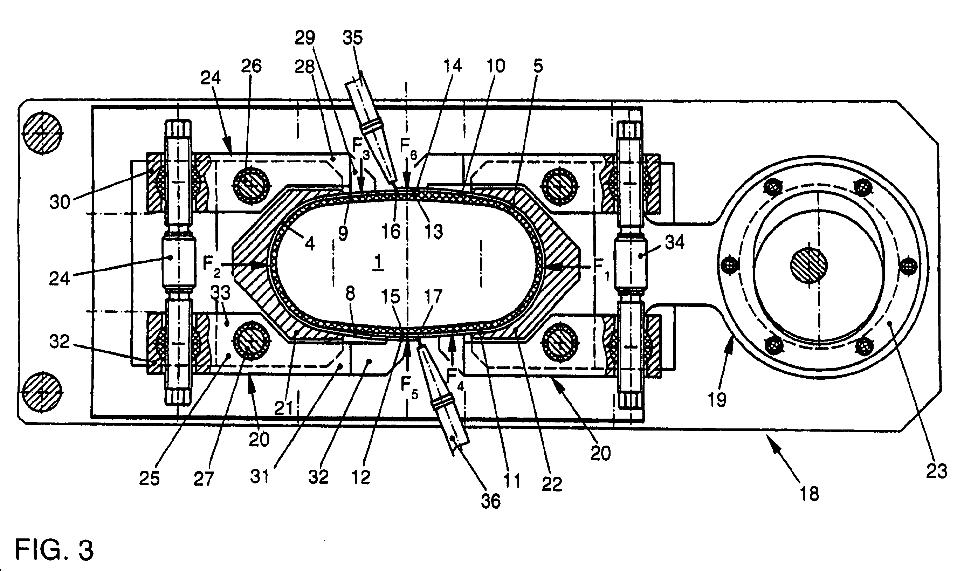

In Figur 2 ist die zu Figur 1 beschriebene Anordnung dargestellt, nachdem auf den Schmalseiten die Kräfte F1 und F2 und auf den Breitseiten die Kräfte F3 bis F6 aufgebracht wurden. Die bewirkte folgendes:

Die Kräfte F1 und F2 schieben die Teilmantelbleche 4 und 5 so ineinander, daß die Stegabschnitte 6 und 7 auf die umlaufende Blähmatte 3 und diese auf die Schmalseiten des Monolithen 2 gepreßt werden. Die Kräfte F3 und F4 drücken die Schenkel 9 und 11 auf die Blähmatte 3 und diese auf die Breitseiten des Monolithen 2. Die Kräfte F5 und F6 drücken die versetzten Randbereiche 12 und 14 auf die darunterliegenden Randbereiche 15 und 13 und auch die Schenkel 8 und 10 auf die Blähmatte 3, die wiederum auf die Breitseiten des Monolithen 2 gepreßt wird.

Durch die beschriebene Krafteinwirkungen, die im wesentlichen über die gesamte Länge der Teilmantelbleche 4 und 5 stattfinden, ist eine gleichmäßige und ausreichende, d.h. definierte, Anpreßung der Teilmantelbleche 4 und 5 über den gesamten Umfang an den Monolithen 2 sichergestellt. Nun können die Randbereiche 12 und 14 mit den darunterliegenden Randbereichen 15 und 13 ohne Zusatzmaterial unter Bildung einer Schweißnaht 16 und 17 verschweißt werden. Schließlich können die Kraftgeber für die Kräfte F 1 bis F6 entfernt und der Katalysator 1 weiter bearbeitet werden.

In Figur 3 ist eine mechanisch betätigte Vorrichtung 18 zur Herstellung der zu den Figuren 1 und 2 beschriebenen Baugruppe dargestellt. Die Teilmantelbleche 4 und 5 sind jedoch nicht wie in den Figuren 1 und 2 dargestellt eingelegt, sondem um 180 Grad verdreht, siehe Kräfte F3 bis F6.

Die Vorrichtung 18 besteht aus einer Spannvorrichtung 19 und zwei Druckvorrichtungen 20. Da der herzustellende Querschnitt ein gleichmäßiges, d.h. dreh- und spiegelsymmetrisches Oval, ähnlich einer Ellipse, darstellt, können hier die Druckvorrichtungen 20 identisch ausgebildet sein.

Die Spannvorrichtung 19 besteht aus einer feststehenden Aufnahme 21, einer gegen diese verschiebbaren Aufnahme 22 und einem damit verbundenen Antrieb 23. Die Aufnahmen 21 und 22 sind identisch und U-förmig zur Aufnahme der vorgebogenen Teilmantelbleche 4 und 5 ausgebildet. Sie weisen im Inneren die Abmessungen auf, die das aufzunehmende Teilmantelblech 4 oder 5 mindestens im mittleren Stegabschnitt 6 oder 7 hat bzw. erhalten soll. Der Antrieb 23 ist als Exzentergetriebe ausgebildet und ist dazu bestimmt, die erforderlichen Kräfte F1 und F2 über die Aufnahmen 21 und 22 auf die Teilmantelbleche 4 und 5 aufzubringen.

Die Druckvorrichtung 20 besteht aus zwei zweiarmigen Hebeln 24 und 25. Beide Hebel 24 und 25 sind um Achsbolzen 26 und 27 drehbar.

Der Hebel 24 umfaßt einen Arm 28, der mit einem Druckstück 29 endet, das mit der Kraft F3 auf den Schenkel 9 drückt. Über den anderen Arm 30 wird die erforderliche Hebelkraft aufgebracht, was noch erläutert wird.

Der Hebel 25 umfaßt einen Arm 31, der mit einem Druckstück 32 endet, das mit der Kraft F5 auf die Randbereiche 12 und 15 drückt. Über den anderen Arm 33 wird die erforderliche Hebelkraft aufgebracht.

Die auf die Hebelarme 30 und 33 aufzubringende Kraft wird dadurch erzeugt, daß sie über eine Einstellschraube 34 mit einem Rechts-/Linksgewinde miteinander verbunden sind. Damit wird ein klauenartiges Umfassen der Teilmantelbleche 4 und 5 durch die Arme 28 und 31 erreicht

Die andere in Figur 3 darüber angeordnete Druckvorrichtung 20 wird nicht näher beschrieben, da sie der beschriebenen völlig entspricht und nur um 180 Grad verdreht zur beschriebenen angeordnet ist. Die entsprechenden Kräfte F4 und F 6 entsprechen denen in der Figur 2.

### Der Funktionsablauf der Vorrichtung 18 ist folgender:

Zunächst ist die Spannvorrichtung 19 geöffnet, die Aufnahmen 21 und 22 befinden sich in ihrer Einlegstellung. Die Druckvorrichtungen 20 sind ebenfalls geöffnet, die Arme 28 und 31 sind durch entsprechende Drehung der Einstellschraube 34 gespreizt. Folglich kann die lose Baugruppe gemäß Figur 1 in die Vorrichtung 18 eingelegt werden.

Sodann wird über das Exzentergetriebe 23 die Aufnahme 22 in Richtung der Aufnahme 21 verschoben, bis das "Sollmaß" und die Kräfte F1 und F2 erreicht sind, die mittleren Stegabschnitte 6 und 7 ihre vorbestimmte Lage an der Schmalseite erreicht haben und sich die zu verschweißenden Randbereiche 12 bis 15 an den Breitseiten übereinander geschoben haben. Durch die Selbsthemmung im Exzentergetriebe 23 kann die Spannung in jedem Punkt der Verschiebung ohne zusätzliche äußere Kraft gehalten werden.

Nun können die Hebel 24 und 25 der beiden Druckvorrichtungen 20 über die Einstellschrauben 24 so betätigt werden, daß die Hebel 24 und 25 über die Druckstücke 29 und 32 die Kräfte F3 bis F6 erzeugen und auch an den Breitseiten eine satte Anlage der Teilmantelbleche 4 und 5 erzielt ist.

Die Vorrichtung läßt Platz zwischen den jeweiligen seitlichen Druckstücken 29 und 32 der beiden Druckvorrichtungen 20, so daß hier über Schweißbrenner 35 und 36 die Schweißnähte 16 und 17 unter Schutzgas hergestellt werden können.

Schließlich können die Spannvorrichtung 19 und die Druckvorrichtungen 20 gelöst werden, um den geschweißten Katalysators 1 zu entnehmen und die Vorrichtung 18 neu zu bestücken.

### BEZUGSZEICHENLISTE

- 1: Katalysator
- 2: Monolith
- 3: Blähmatte
- 4: Teilmantelblech
- 5: Teilmantelblech
- 6: Stegabschnitt
- 7: Stegabschnitt
- 8: Schenkel
- 9: Schenkel
- 10: Schenkel
- 11: Schenkel
- 12: Randbereich
- 13: Randbereich
- 14: Randbereich
- 15: Randbereich
- 16: Schweißnaht
- 17: Schweißnaht
- 18: Vorrichtung
- 19: Spannvorrichtung
- 20: Druckvorrichtungen
- 21: Aufnahme, feststehend
- 22: Aufnahme, verschiebbar
- 23: Antrieb, Exzentergetriebe
- 24: zweiarmiger Hebel
- 25: zweiarmiger Hebel
- 26: Achsbolzen
- 27: Achsbolzen
- 28: Arm
- 29: Druckstück
- 30: Arm
- 31: Arm
- 32: Druckstück
- 33: Arm
- 34: Einstellschraube
- 35: Schweißbrenner
- 36: Schweißbrenner
- F1: Kraft in 19
- F2: Kraft in 19
- F3: Kraft in 20
- F4: Kraft in 20
- F5: Kraft in 20
- F6: Kraft in 20

## Patentansprüche

1. Verfahren zur Herstellung eines Katalysators (1) mit einem nicht-kreisförmigen Monolithen (2), der unter Zwischenschluß einer Blähmatte (3) von einem Mantelblech (4, 5) eng umschlossen wird, wobei das Mantelblech aus zwei Teilmantelblechen (4, 5) besteht, die so in ihre bestimmungsmäßige Endlage gebogen werden, dass sie sich mit zumindest im wesentlichen in Längsrichtung des Monolithen (2) verlaufenden Randbereichen (12, 13, 14,15) überlappen und in den Randbereichen (12. 13. 14. 15) miteinander unlösbar verbunden werden, **dadurch gekennzeichnet, dass** bei bereits übereinander geschobenen Randbereichen (12. 13, 14, 15) mit Druckstücken (32) jeweils auf die außenliegenden Randbereiche (12, 14) oder auf die freien Schenkel (8. 10) der Teilmantelbleche (4, 5) und mit Druckstücken (29) auf die freien Schenkel (9, 11) der Teilmantelbleche (4, 5) gedrückt wird und Kräfte (F3, F4) die Schenkel (9, 11) auf die Blähmatte (3) und diese auf die Breitseiten des Monolithen (2) drücken und Kräfte (F5. F6) die Randbereiche (12, 14) auf die darunterliegenden Randbereiche (15, 13) und die Schenkel (8, 10) auf die Blähmatte (3) drücken, die wiederum auf die Breitseiten des Monolithen (2) gepreßt wird.

2. Verfahren nach Patentanspruch 1, **dadurch gekennzeichnet, dass** die Teilmantelbleche (4, 5) mindestens nahezu in ihre Endform vorgeformt werden, die Randbereiche (12. 13, 14, 15) in die Überlappungslage oder dergl. gebracht werden und schließlich miteinander verbunden werden.

3. Verfahren nach Patentanspruch 1 oder 2, **dadurch gekennzeichnet, dass** die Teilmantelbleche (4,5) mindestens in etwa in U-Form vorgebogen sind.

4. Verfahren nach einem der Patentansprüche 1 bis 3, **dadurch gekennzeichnet, dass** mindestens ein Randbereich (12, 14) eines Teilmantelbleches (4, 5) zum anschließenden, übrigen Bereich (8, 10) des Teilmantelbleches (4, 5) nach außen versetzt ausgebildet ist.

5. Vorrichtung zur Durchführung des Verfahrens nach einem der Patentansprüche 1 bis 4 mit einer Spann- und/oder Formvorrichtung (19) zur Aufnahme von mindestens den mittleren Stegabschnitt (6, 7) und eventuell den unmittelbar sich daran anschließenden Abschnitten der Teilmantelbleche (4, 5), so dass die freien Schenkel (8, 9, 10, 11) so übereinander geschoben werden können, dass die Randbereiche (12, 13, 14, 15) unlösbar miteinander verbunden werden können, **dadurch gekennzeichnet, dass** eine Druckvorrichtung (20) vorgesehen ist, wobei bei bereits übereinander geschobenen Randbereichen (12, 13, 14, 15) mit Druckstücken (32) jeweils auf die außenliegenden Randbereiche (12, 14) oder auf die freien Schenkel (8, 10) der Teilmantelbleche (4, 5) und mit Druckstücken (29) auf die freien Schenkel (9, 11) der Teilmantelbleche (4, 5) gedrückt wird und Kräfte (F3, F4) die Schenkel (9, 11) auf die Blähmatte (3) und diese auf die Breitseiten des Monolithen (2) drücken und Kräfte (F5, F6) die Randbereiche (12, 14) auf die darunterliegenden Randbereiche (15, 13) und die Schenkel (8, 10) auf die Blähmatte (3) drücken, die wiederum auf die Breitseiten des Monolithen (2) gepreßt wird.

6. Vorrichtung nach Patentanspruch 5, **dadurch gekennzeichnet, dass** die Spann- und/oder Formvorrichtung (19) einen selbsthemmenden Antrieb (23) aufweist.

7. Vorrichtung nach Patentanspruch 6, **dadurch gekennzeichnet, dass** der Antrieb (23) als Exzenter- oder Schneckengetriebe ausgebildet ist.

8. Vorrichtung nach Patentanspruch 7, **dadurch gekennzeichnet, dass** die Druckstücke (29, 32) die zu verbindenden Randbereiche (12, 13, 14, 15) freilassen.

9. Vorrichtung nach einem der Patentansprüche 5 bis 8, **dadurch gekennzeichnet, dass** die Druckvorrichtung (20) aus einem zweiarmigen Hebel (24) besteht, der mit einem Arm (28) die Druckkraft (F3) auf die Teilmantelbleche (4, 5) aufbringt, indem der andere Arm (30) mit Bezug auf den Drehpunkt (26) des Hebels (24) verschwenkbar ist.

10. Vorrichtung nach Patentanspruch 9, **dadurch gekennzeichnet, dass** mindestens zwei zweiarmige Hebel (24, 25) angeordnet sind, deren Arme (28, 30, 31, 33) über eine gemeinsame Verstellvorrichtung (34) klauenartig einstellbar und verschwenkbar sind.

11. Vorrichtung nach Patentanspruch 9 oder 10, **dadurch gekennzeichnet, dass** der Hebel (24, 25) mechanisch, pneumatisch oder hydraulisch betätigbar und steuerbar ist.

## Claims

1. Process for producing a catalytic converter (1) with a non-circular monolith (2) which is tightly surrounded by a metal casing sheet (4, 5) with a swellable mat (3) in between, the metal casing sheet comprising two partial metal casing sheets (4, 5) which are bent into their intended final position in such a way that they overlap with edge regions (12, 13, 14, 15) running at least substantially in the longitudinal direction of the monolith (2) and are nonreleasably joined to one another in the edge regions (12, 13, 14, 15), **characterized in that** when the edge regions (12, 13, 14, 15) have already been pushed over one another, pressure-exerting pieces (32) are in each case used to exert pressure on the outer edge regions (12, 14) or on the free limbs (8, 10) of the partial metal casing sheets (4, 5), and pressure-exerting pieces (29) are used to exert pressure on the free limbs (9, 11) of the partial metal casing sheets (4, 5), and forces (F3, F4) press the limbs (9, 11) onto the swellable mat (3) and press the latter onto the wide sides of the monolith (2), and forces (F5, F6) press the edge regions (12, 14) onto the edge regions (15, 13) beneath them and press the limbs (8, 10) onto the swellable mat (3), which is in turn pressed onto the wide sides of the monolith (2).

2. Process according to Patent Claim 1, **characterized in that** the partial metal casing sheets (4, 5) are preformed at least virtually into their final shape, the edge regions (12, 13, 14, 15) are moved into the overlapping position or the like and are finally joined to one another.

3. Process according to Patent Claim 1 or 2, **characterized in that** the partial metal casing sheets (4, 5) are prebent at least approximately in a U-shape.

4. Process according to one of Patent Claims 1 to 3, **characterized in that** at least one edge region (12, 14) of a partial metal casing sheet (4, 5) is designed so as to be offset outwards with respect to the adjoining, remaining region (8, 10) of the partial metal casing sheet (4, 5).

5. Apparatus for carrying out the process according to one of Claims 1 to 4, having a clamping and/or shaping apparatus (19) for receiving at least the middle web portion (6, 7) and if appropriate the immediately adjoining portions of the partial metal casing sheets (4, 5), so that the free limbs (8, 9, 10, 11) can be pushed over one another in such a way that the edge regions (12, 13, 14, 15) can be nonreleasably joined to one another, **characterized in that** a pressure-exerting apparatus (20) is provided, wherein when the edge regions (12, 13, 14, 15) have already been pushed over one another, pressure-exerting pieces (32) are in each case used to exert pressure on the outer edge regions (12, 14) or on the free limbs (8, 10) of the partial metal casing sheets (4, 5), and pressure-exerting pieces (29) are used to exert pressure on the free limbs (9, 11) of the partial metal casing sheets (4, 5), and forces (F3, F4) press the limbs (9, 11) onto the swellable mat (3) and press the latter onto the wide sides of the monolith (2), and forces (F5, F6) press the edge regions (12, 14) onto the edge regions (15, 13) beneath them and press the limbs (8, 10) onto the swellable mat (3), which is in turn pressed onto the wide sides of the monolith (2).

6. Apparatus according to Patent Claim 5, **characterized in that** the clamping and/or shaping apparatus (19) has a self-locking drive (23).

7. Apparatus according to Patent Claim 6, **characterized in that** the drive (23) is designed as an eccentric or screw gear mechanism.

8. Apparatus according to Patent Claim 7, **characterized in that** the pressure-exerting pieces (29, 32) leave the edge regions (12, 13, 14, 15) that are to be joined clear.

9. Apparatus according to one of Patent Claims 5 to 8, **characterized in that** the pressure-exerting apparatus (20) comprises a two-arm lever (24), which uses one arm (28) to apply the compressive force (F3) to the partial metal casing sheets (4, 5) by virtue of the fact that the other arm (30) is pivotable with respect to the fulcrum (26) of the lever (24).

10. Apparatus according to Patent Claim 9, **characterized in that** at least two two-arm levers (24, 25) are fitted, the arms (28, 30, 31, 33) of which are pivotable and settable in claw-like fashion by way of a common adjustment apparatus (34).

11. Apparatus according to Patent Claim 9 or 10, **characterized in that** the lever (24, 25) can be controlled and actuated mechanically, pneumatically or hydraulically.

## Revendications

1. Procédé en vue de la fabrication d'un catalyseur (1), ayant un corps monolithe non circulaire (2), qui est étroitement entouré d'une tôle d'enveloppe (4, 5), avec insertion intermédiaire d'une natte de gonflement (3), la tôle d'enveloppe étant constituée de deux tôles d'enveloppe partielles (4, 5), qui sont courbées dans leurs positions finales conformes à leur spécification, de manière à ce qu'elles se superposent tout au moins pour l'essentiel aux domaines limitrophes (12, 13, 14, 15) se déployant dans la direction longitudinale du corps monolithe (2) et qu'elles soient liées dans les domaines limitrophes (12, 13, 14, 15) les unes aux autres de manière inamovible, **caractérisé en ce que**, dans le cas de domaines limitrophes (12, 13, 14, 15) déjà décalés les uns sur les autres, on presse, à chaque fois, à l'aide des membres de transmission (32), sur les domaines limitrophes (12, 14) situés à l'extérieur ou sur les montants libres (8, 10) des tôles d'enveloppe partielles (4, 5) et, à l'aide des membres de transmission (29), sur les montants libres (9, 11) des tôles d'enveloppe partielles (4, 5) et **en ce que** les forces (F3, F4) pressent les montants (9, 11) sur la natte de gonflement (3) et celle-ci sur les cotés larges du corps monolithe (2) et **en ce que** les forces (F5, F6) pressent les domaines limitrophes (12, 14) sur les domaines limitrophes (15, 13) situés en dessous et les montants (8, 10) sur la natte de gonflement (3), qui est pressée à nouveau sur les côtés larges du corps monolithe (2).

2. Procédé selon la revendication 1, **caractérisé en ce que** les tôles d'enveloppe partielles (4, 5) sont formées au préalable au moins presque dans leur forme finale, **en ce que** les domaines limitrophes (12, 13, 14, 15) sont amenés dans la situation de superposition ou dans une situation similaire et sont finalement liés les uns aux autres.

3. Procédé selon la revendication 1 ou 2, **caractérisé en ce que** les tôles d'enveloppe partielles (4, 5) sont au moins courbées au préalable en gros en forme de profil en U.

4. Procédé selon l'une quelconque des revendications 1 à 3, **caractérisé en ce qu'**au moins un domaine limitrophe (12, 14) d'une tôle d'enveloppe partielle (4, 5) est formé de manière décalée vers l'extérieur vers le domaine auxiliaire adjacent (8, 10) de la tôle d'enveloppe partielle (4, 5).

5. Dispositif en vue de l'exécution du procédé selon l'une quelconque des revendications 1 à 4, ayant un dispositif de serrage et/ou un dispositif de mise en forme (19), en vue de la réception au moins du tronçon de traverse médian (6, 7) et éventuellement des tronçons des tôles d'enveloppe partielles (5, 5) immédiatement adjacents à celui-ci, de telle sorte que les montants libres (8, 9, 10, 11) puissent être décalés les uns sur les autres de manière à ce que les domaines limitrophes (12, 13, 14, 15) puissent être liés les uns aux autres d'une manière inamovible, **caractérisé en ce que** l'on prévoit un dispositif de pression (20), étant donné que, dans le cas de domaines limitrophes (12, 13, 14, 15) déjà décalés les uns sur les autres, on presse, à chaque fois, à l'aide des membres de transmission (32), sur les domaines limitrophes (12, 14) situés à l'extérieur ou sur les montants libres (8, 10) des tôles d'enveloppe partielles (4, 5) et, à l'aide de membres de transmission (29), sur les montants libres (9, 11) des tôles d'enveloppe partielles (4, 5) et **en ce que** les forces (F3, F4) pressent les montants (9, 11) sur la natte de gonflement (3) et celle-ci sur les cotés larges du corps monolithe (2) et **en ce que** les forces (F5, F6) pressent les domaines limitrophes (12, 14) sur les domaines limitrophes (15, 13) situés en dessous et les montants (8, 10) sur la natte de gonflement (3), qui est pressée à nouveau sur les côtés larges du corps monolithe (2).

6. Dispositif selon la revendication 5, **caractérisé en ce que** le dispositif de serrage et/ou le dispositif de mise en forme (19) présente un entraînement auto-inhibant (23).

7. Dispositif selon la revendication 6, **caractérisé en ce que** l'entraînement (23) est formé en tant qu'engrenage à excentrique ou en tant qu'engrenage à vis sans fin.

8. Dispositif selon la revendication 7, **caractérisé en ce que** les membres de transmission (29, 32) laissent libres les domaines limitrophes à relier (12, 13, 14, 15).

9. Dispositif selon l'une quelconque des revendications 5 à 8, **caractérisé en ce que** le dispositif de pression (20) est constitué d'un levier à deux bras (24), qui applique avec un bras (28) la force de pression (F3) sur les tôles d'enveloppe partielles (4, 5), en sorte que l'autre bras (30) est pivotable par rapport au point de rotation (26) du levier (24).

10. Dispositif selon la revendication 9, **caractérisé en ce que** l'on arrange au moins deux leviers à deux bras (24, 25), dont les bras (28, 30, 31, 33) sont réglables et pivotables sous une forme similaire à des griffes par l'intermédiaire d'un dispositif de décalage commun (34).

11. Dispositif selon la revendication 9 ou la revendication 10, **caractérisé en ce que** le levier (24, 25) peut être actionné et commandé par voie mécanique, pneumatique ou hydraulique.
